# EUROPÄISCHE PATENTSCHRIFT

(11) **EP 2 982 951 B1**
(45) Veröffentlichungstag und Bekanntmachung des Hinweises auf die Patenterteilung: **10.10.2018**
(21) Anmeldenummer: 14179811.6
(22) Anmeldetag: 05.08.2014
(51) Int. Cl.: G01J 5/08, G01J 5/00

(54) **Thermografiemodul für Straßenfertiger**
Thermography module for road finishers
Module de thermographie pour finisseur de route

(43) Veröffentlichungstag der Anmeldung: 10.02.2016
(73) Patentinhaber: Joseph Vögele AG, 67075 Ludwigshafen (DE)
(72) Erfinder: Buschmann, Martin, 67435 Neustadt (DE); Rutz, Arnold, 67065 Ludwigshafen (DE); Delius, Henning, 67374 Hanhofen (DE)
(74) Vertreter: Grünecker Patent- und Rechtsanwälte PartG mbB

(56) Entgegenhaltungen:
- EP-A1- 2 634 747
- WO-A1-00/70150
- WO-A2-2006/060746
- CN-A- 102 691 251
- US-A1- 2004 264 542

## Beschreibung

Die Erfindung betrifft ein System umfassend einen Fertiger mit einer Temperaturmessvorrichtung zur kontinuierlichen Erfassung von Temperaturwerten eines von dem Fertiger eingebauten Belages, das Bildaufzeichnungsmittel und eine Auswerteeinheit umfasst, um die Erfassung der Einbautemperatur zu dokumentieren.
Ein Straßenfertiger ist eine Maschine, mit der sich ungebundene und gebundene Schichten bzw. Beläge herstellen lassen. Sobald ein eingebauter Belag für die bestimmungsgemäße Benutzung freigegeben wird, sind spätere Nachbesserungen mit einem erheblichen Aufwand, wie beispielsweise der Sperrung von Straßenabschnitten oder Gebäudeteilen, verbunden. Dementsprechend hat die Qualitätskontrolle im Bereich des Asphalteinbaus große Bedeutung. Ein System, das die Messung der Qualität der Asphaltierung oder der Qualität des eingebauten Asphalts erlaubt, zeigt die WO 2004/034351 A2. Insbesondere wird eine manuelle Nachprüfung der Asphalteigenschaften ermöglicht, wobei einzelne Messvorgänge mit Ortsdaten verknüpft werden können.
Auf der Ursachenseite ist insbesondere die Verarbeitungstemperatur der im Straßenbau verwendeten Beläge, insbesondere Asphalt, eine wesentliche Prozessgröße, die erheblichen Einfluss auf die Gebrauchseigenschaften wie Standfestigkeit, Schichtenverbund und Lebensdauer der eingebauten Beläge hat. Straßenfertiger verteilen typischerweise Asphaltierungsmaterial und führen eine Vorverdichtung einer Decke des Asphaltierungsmaterials mit einer Einbaubohle aus, die am hinteren Ende des Straßenfertigers befestigt ist und von diesem gezogen wird. Der eingebaute Belag wird nachfolgend von Walzen weiter verdichtet. Die Temperatur des Materials in unterschiedlichen Stufen des Einbauprozesses beeinflusst neben anderen Faktoren wie beispielsweise den Umgebungs- und Wetterbedingungen beim Einbau den Wirkungsgrad und den Erfolg eines Belagbauauftrags.
Die Bearbeitung beispielsweise von Asphaltierungsmaterial unter optimalen Temperaturbedingungen ist seit Langem als wichtig erkannt worden, ist jedoch oft mit manuellen Kontrollmessungen durch das Unterstützungs- bzw. Bedienpersonal verbunden. Das Asphaltierungsmaterial wird typischerweise mit einer vergleichsweise hohen Temperatur in einer Asphalt- bzw. Bitumenfabrik erhalten. Abhängig von der Distanz, die eine Liefermaschine zur Baustelle zurücklegt, sowie vom Verkehr und der Umgebungstemperatur kann der Asphalt vor der Lieferung abkühlen. Ferner kann der Fortschritt der Asphaltierungsmaschinen und der Verdichtungsmaschinen bzw. -walzen variieren. Wenn sich der gesamte Asphaltierungsvorgang verlangsamt hat, müssen Lieferlastwägen gelegentlich zuwarten, das Asphaltmaterial abzuladen. Das Ausmaß einer Abkühlung, wenn das Asphaltmaterial schließlich die Asphaltierungsmaschine erreicht hat, kann abhängig von der Temperatur des Asphaltierungsmaterials bei der Lieferung, von Umgebungsfaktoren, vom Einsatz isolierter bzw. nicht-isolierter Lieferlastwägen und von einem ordnungsgemäßen gegenüber einem nicht ordnungsgemäßen Betrieb der Asphaltierungsmaschine usw. variieren, wobei ökologische und ökonomische Aspekte, beispielweise in Bezug auf den Gasverbrauch am Brenner, zunehmend an Bedeutung gewinnen. In manchen Fällen kann sich das Asphaltmaterial in der Asphaltierungsmaschine abscheiden, und somit können vergleichsweise kühlere und vergleichsweise wärmere Taschen bzw. Anhäufungen von Material innerhalb der Maschine existieren, was zu unerwarteten Temperaturgradienten im Asphaltmaterial führt, sobald es auf der Arbeitsoberfläche verteilt ist. Wenn das Asphaltierungsmaterial ausgestoßen und von der Asphaltierungsmaschine bzw. dem Straßenfertiger verteilt worden ist, weiter durch die Bohle behandelt und bereit ist, um durch die verschiedenen Verdichtungsmaschinen weiter verdichtet zu werden, kann seine Temperatur beträchtlich von einer erwarteten Temperatur abweichen und von einem Abschnitt des eingebauten Belages zum nächsten aufgrund von unbeabsichtigter Abscheidung oder schlechter Vermischung bezüglich der Temperatur ungleichförmig sein.

Aufgrund der hervorstechenden Wichtigkeit der Einbautemperatur des Belages gewinnt das Messen der Einbautemperatur zusehends an Bedeutung und es haben sich in den letzten Jahren unterschiedliche Lösungen im Markt herausgebildet, die die Nachfrage nach messtechnischen Nachweisen über die Einbautemperatur befriedigen und dadurch auch Nachbesserungen erleichtern. Auf dem Markt befinden sich unterschiedliche Systeme, die hierfür die Einbautemperatur hinter dem Fertiger, insbesondere hinter der Einbaubohle messen. Dies reicht vom Pyrometer-Array über Wärmeabtaster bzw. IR-Scanner bis hin zu schwenkbaren Pyrometern. Diese Systeme werden eingesetzt, um einen mehr oder weniger flächigen Eindruck des Temperaturverlaufs hinter dem Fertiger zu gewinnen.

Andere Systeme zur Gewinnung der Einbautemperaturinformation basieren auf einer Infrarot-kamera, deren Bilddaten durch eine angepasste Software zu Abtastzeilen verrechnet werden. Diese Zeilen haben einen definierten Abstand zur Hinterkante der Bohle, wobei jede Zeile den zur Fahrtrichtung des Straßenfertiges transversalen Temperaturverlauf der eingebauten Schicht repräsentiert. Die einzelnen Zeilen werden von der Software zu einem flächigen Bild, einem Temperaturteppich bzw. zweidimensionalen Temperaturprofil zusammengesetzt. Diese Bilder dienen nachfolgend der Beurteilung der Temperaturverteilung des eingebauten Asphalts. Wie oben erwähnt, ist hierbei eine möglichst gleichmäßige Temperaturverteilung ein Qualitätsmerkmal, da so gleichmäßige Voraussetzungen für eine nachfolgende Walzverdichtung gegeben sind.

Die DE 10 2008 058 481 A1 beschreibt eine Bewertung eines solchen Temperaturverlaufs während des Asphaltierungsprozesses und insbesondere die Anpassung eines Asphaltierungsplanes für den Einsatz der einzelnen Maschinen des Asphaltierungszuges. So wird insbesondere auf Basis der gewonnenen Temperaturinformationen der Abstand zwischen den Verdichtungswalzen und der Asphaltierungsmaschine bzw. dem Straßenfertiger derart angepasst, dass der Asphalt durch die nachfolgenden Verdichtungswalzen nicht innerhalb eines Temperaturbereiches, der als "weiche Zone" bekannt ist, bearbeitet wird, d. h. entweder oberhalb der oberen Grenztemperatur oder unterhalb der unteren Grenztemperatur des Temperaturbereiches der weichen Zone.

US 2004/264542 A1 zeigt ein Radiometer mit einer integrierten Digitalkamera, um ein Bild der gemessenen "Energiezone" des Radiometers zu erstellen. Radiometer würden verwendet, um Ferntemperaturmessungen vorzunehmen. Eine entsprechende Infrarotoptik fokussiert die Intensität der Infrarotstrahlung auf einem Infrarotdetektor. Der Radiometer berechnet die Temperatur der abgebildeten Energiezone basierend auf dieser auf dem Infrarotdetektor fokussierten Intensität der Infrarotstrahlung. In einem Temperaturbeobachtungsmodus erfasst das Radiometer kontinuierlich die Temperatur eines zu beobachtenden Objektes und erstellt bei Erfüllung einer Alarmbedingung eine fotografische Abbildung zusammen mit einem Datum und Zeitstempel.

Die WO 00/70150 A1 wiederum befasst sich mit einem Temperaturüberwachungssystem, das auf einem Straßenfertiger Verwendung findet, und in einem Zeilenabtastmodus zeilenweise die Temperatur des eingebauten Belages abtastet. Die gewonnene Information wird in Ausführungsformen direkt für eine angepasste Steuerung der Einbaubohle verwendet oder an andere Maschinen des Asphaltierungszuges kommuniziert.

Diese bekannten Systeme gehen von einer idealisierten Erfassung der Temperatur des eingebauten Belages aus. In der Praxis kommt es aber immer wieder zum Einfahren von Walzen oder anderen Maschinen des Asphaltierungszuges oder dem Queren des Belages durch einzelne Personen des Bedienpersonals. Dies kann zu Fehlmessungen der Einbautemperatur führen, die sich in einem zweidimensionalen Temperaturprofil bzw. Temperaturteppich niederschlagen. So ist die dann lokal erfasste Temperatur im Vergleich zur Temperatur des umgebenden eingebauten Belages entweder zu niedrig, zu hoch, stark inhomogen oder in sonstiger Weise als von der Umgebungstemperatur abweichend zu erkennen, jedoch im Nachgang nicht ohne Weiteres festzustellen, ob der Grund für diese Abweichung eine Inhomogenität im eingebauten Material, beispielsweise durch Abscheidung und Taschenbildung, oder ein Erfassen von Fremdobjekten ist. Ferner kann eine Fehlfunktion einer Infrarotkamera oder vergleichbaren Temperaturmessvorrichtung, die zur Erfassung der Einbautemperatur verwendet wird, vorliegen, so dass die tatsächlichen Messpunkte der Temperaturerfassung außerhalb des Zielbereiches, des eingebauten Belages, liegen oder der erfasste Bildbereich fehlerhaft zwischen den Messungen variiert. Ist die Temperaturmessvorrichtung nicht korrekt auf den eingebauten Belag ausgerichtet, so kann der erfasste Temperaturteppich das bewertende Personal vor unlösbare Rätsel stellen.

Deshalb liegt der vorliegenden Erfindung die Aufgabe zugrunde, ein weniger fehleranfälliges, besser an die Praxis angepasstes System mit Temperaturmessvorrichtung zur Erfassung der Einbautemperatur des von einem Straßenfertiger eingebauten Belages vorzusehen.

Diese Aufgabe wird gelöst mit den Merkmalen des Anspruchs 1. Ein Verfahren nach der Erfindung sowie ein computerlesbares Speichermedium mit Anweisungen eines erfindungsgemäßen Steuerverfahrens werden jeweils nach den weiteren unabhängigen Ansprüchen 10 und 11 bereitgestellt. Verbesserte Weiterbildungen der Erfindung werden durch die weiteren Merkmale der Unteransprüche definiert.
Die Erfindung bezieht sich auf ein System mit einer Temperaturmessvorrichtung zur kontinuierlichen Erfassung von Temperaturwerten eines von einem Fertiger eingebauten Belages, Bildaufzeichnungsmitteln und einer Auswerteeinheit. Die Auswerteeinheit ist konfiguriert, einen Bereich des eingebauten Belages als Abweichungsbereich zu bestimmen, wenn basierend auf den für den Bereich erfassten Temperaturwerten ein oder mehrere Abweichungskriterien erfüllt sind. Die Bestimmung eines Abweichungsbereichs erfolgt während des Einbaus und in zeitlicher Nähe zur Erfassung der Temperaturwerte für den Bereich. Das System ist konfiguriert, mit den Bildaufzeichnungsmitteln eine dem Abweichungsbereich zugeordnete Aufnahme zu erstellen, um die Erfassung der Temperaturwerte für den Abweichungsbereich zu dokumentieren. Damit erlaubt die Erfindung eine zielgerichtete Ermittlung relevanter Überprüfungs- bzw. Nachbesserungsstellen und liefert überdies eine verbesserte Dokumentation des Einbauprozesses.

Im Rahmen der Erfindung bedeutet *"in zeitlicher Nähe",* dass die Bestimmung eines Abweichungsbereichs beispielsweise innerhalb einer Zehntelsekunde, innerhalb weniger Zehntelsekunden, innerhalb einer Sekunde oder innerhalb einer Zeitspanne von bis zu 4 oder 5 Sekunden erfolgt.
Durch die Dokumentation der Temperaturwerterfassung gerade für solche Bereiche, die als Abweichungsbereiche bestimmt werden, ermöglicht die Erfindung eine informierte Weiterverarbeitung der durch die kontinuierliche Temperaturmessung gewonnenen Temperaturinformationen dort, wo Abweichungen von der Temperatur des umgebenden Belages, von einer Zieltemperatur oder einem Zieltemperaturbereich vorliegen. Messungen solcher Bereiche führten nach dem Stand der Technik dazu, dass diese Bereiche notgedrungen entweder nicht weiter beachtet wurden oder eine Überprüfung jedes einzelnen der identifizierten Bereiche erforderlich war.

Die Erfindung erlaubt eine differenzierte Behandlung von Fehlstellen des eingebauten Belages einerseits und von Fehlmessungen andererseits. Diejenigen Abweichungsbereiche, die anhand der erfindungsgemäßen Dokumentation als nicht auf der Messung von Fremdobjekten oder anderen Fehlmessungen basierend identifiziert werden, können mit erheblich verringertem Aufwand gezielt überprüft und ggf. nachgebessert werden. Somit verringert die Erfindung den für ein verbessertes Qualitätsniveau des eingebauten Belages erforderlichen zeitlichen Aufwand und die Kosten. Der Einbauprozess kann für einen Auftraggeber lückenlos dokumentiert werden. Auffällige Stellen können im Nachgang gezielt überprüft werden.
Die Aufnahme erfolgt vorteilhaft in zeitlicher Nähe zur Erfassung der Temperaturwerte, so dass die Aufnahme nicht nur der Dokumentation der Fehlstelle als solcher, sondern gerade auch der Dokumentation der Erfassung der Temperaturwerte für den Abweichungsbereich dient. Die Abweichungskriterien sind vorteilhaft so angelegt, dass ein Abweichungsbereich insbesondere dann bestimmt wird, wenn eine Fehlmessung vorliegt. Fehlmessungen umfassen eine Erfassung der Temperatur anderer Objekte bzw. von Fremdobjekten anstatt des eingebauten Belages. Eine Fehlmessung kann auch vorliegen bei einer Fehlfunktion des Fertigers, z.B. einem Abbruch der Asphaltaufbringung und/oder bei einer Fehlfunktion bzw. Fehlausrichtung der Temperaturmessvorrichtung.
Die Abweichungskriterien können relative oder absolute Untergrenzen oder Obergrenzen umfassen oder außergewöhnliche Inhomogenitäten in der Temperaturverteilung aufdecken. Eine starke Varianz in den Temperaturwerten eines vergleichsweise kleinen Bereiches kann anhand von entsprechenden Abweichungskriterien als verdächtig eingestuft werden, da im eingebauten Belag nur moderate Temperaturgradienten zu erwarten sind.
Die Temperatur des eingebauten Belages wird vorteilhaft in einem bestimmten Abstand hinter der Einbaubohle des Fertigers erfasst. Dies erlaubt eine konsistente Bestimmung der Einbautemperatur des Belages unter Berücksichtigung der Auswirkungen der Ausbreitung und Vorverdichtung des Belages durch die Einbaubohle.

Gemäß der Erfindung ist die Auswerteeinheit so konfiguriert, dass die Aufnahme dem Abweichungsbereich als Zusatzinformation zugeordnet wird und die Zusatzinformation zusammen mit dem aus den erfassten Temperaturwerten gebildeten zweidimensionalen Profil der Einbautemperatur abgespeichert wird. Dies erlaubt eine besonders übersichtliche Darstellung, Ermittlung und Nachverfolgung möglicher Nachbesserungsstellen.

Vorteilhaft weist das System ferner Geopositionserfassungsmittel auf, um insbesondere einem Abweichungsbereich eine Geoposition als Zusatzinformation zuzuordnen. Das zusätzliche Abspeichern einer Geoposition für die bestimmten Abweichungsbereiche erleichtert das Auffinden der identifizierten Fehlstellen, für die beispielsweise anhand der erstellten Aufnahmen Nachbesserungsbedarf erkannt wird.

Ein zeitlicher Abstand der zeilenweisen Temperaturerfassung wird in Verbindung mit einer ermittelten räumlichen Relation zwischen bestimmten Abweichungsbereichen verwendet, um nicht für jeden Ausreißer bzw. jeden einzelnen Abweichungsbereich eine Aufnahme bzw. ein Bild zu erstellen und stattdessen dieselbe Aufnahme mehr als einem ermittelten Abweichungsbereich zuzuordnen. Dadurch kann die erforderliche Datenmenge zur Dokumentation der Erfassung der Einbautemperatur begrenzt werden. Die Zuordnung erfolgt auf Basis einer zeitlich-räumlichen Beziehung zwischen zwei oder mehr Abweichungsbereichen unter optionaler Berücksichtigung von weiteren vordefinierten Parametern, die mögliche und erwartete Fehlmessungsursachen repräsentieren können. Die Anzahl der in der Praxis wichtigsten Ursachen für Fehlmessungen durch querende Personen oder Fahrzeuge oder sonstige Fremdobjekte ist im Belagbau begrenzt. Dieses Wissen kann bei einer effizienten Reduktion der Erstellung und/oder Speicherung von zugeordneten Aufnahmen Verwendung finden.
Die Temperaturmessvorrichtung umfasst gemäß Ausführungsformen einen Wärmeabtaster, einen schwenkbaren Pyrometer, ein Pyrometer-Array oder eine Infrarotkamera. Die Bildaufzeichnungsmittel umfassen eine optische Kamera.

Das System ist eingerichtet, die erfassten Temperaturwerte zeilenweise abzulegen, wobei jede Zeile den zur Fahrtrichtung des Fertigers transversalen Temperaturverlauf der eingebauten Schicht repräsentiert. Die Bildaufzeichnungsmittel sind konfiguriert, als Aufnahme eine Gesamtaufnahme eines Abschnitts des eingebauten Belages zu erstellen. Dies erlaubt eine verbesserte Einordnung, insbesondere eine verbesserte Erkennung bzw. Detektion der ursächlichen Fremdobjekte und oder einer Fehlausrichtung. Je größer der Ausschnitt der Gesamtaufnahme ausfällt, desto mehr bestimmte Abweichungsbereiche können im Mittel einer einzelnen Aufnahme zugeordnet werden, was bei entsprechender Kompression der Aufnahme insgesamt zu einer Reduktion der anfallenden Datenmenge führen kann.
Nach einer Ausführungsform sind die Temperaturmessvorrichtung und die Bildaufzeichnungsmittel des Systems in einem Thermografiemodul integriert, das mit Hilfe von Fixierungsmitteln an einem Fertiger oberhalb dessen Einbaubohle oder am Dach eines Führerstandes des Fertigers angebracht werden kann. Die integrierte Vorsehung in demselben Modul stellt eine konstante relative Ausrichtung der optischen Achsen der Temperaturmessvorrichtung und der Bildaufzeichnungsmittel sicher, auch unter den rauen Betriebsbedingungen des Belagbaus.

Die Erfindung sieht ferner einen Fertiger mit der Temperaturmessvorrichtung und den Bildaufzeichnungsmitteln des Systems vor, vorteilhaft in einem Thermografiemodul integriert, wobei die Auswerteeinheit des Systems an einem zum Fertiger entfernten Ort angeordnet sein kann und drahtlos mit der Temperaturmessvorrichtung und den Bildaufzeichnungsmitteln kommunizierend ausgestaltet ist. Dies erlaubt vorteilhaft die Verwendung einer zentralen Auswerteeinheit für mehrere Thermografiemodule und damit Fertiger und eine zentrale Auswertung, Verarbeitung und ggf. Ansteuerung der im jeweiligen Einbauprozess nachfolgenden Einheiten.
Erfindungsgemäße Ausführungsformen werden anhand der nachfolgenden Zeichnungen beschrieben. Es zeigen:
- Fig. 1: ein erfindungsgemäßes System mit einer Temperaturmessvorrichtung,
- Fig. 2A: einen Straßenfertiger mit Thermografiemodul zur Erfassung der Einbautemperatur des Belages im Einbauprozess,
- Fig. 2B: den Straßenfertiger der Fig. 2A, wobei die Erstellung einer Aufnahme zur Dokumentation eines bestimmten Abweichungsbereiches dargestellt ist,
- Fig. 3A und 3B: zweidimensionale Temperaturprofile mit bestimmten Abweichungsbereichen und zugeordneten Aufnahmen,
- Fig. 4: ein Verfahren zur Dokumentation der Erfassung der Einbautemperatur und
- Fig. 5: ein bei Ausführung von Anweisungen eines computerlesbaren Speichermediums ausgeführtes Steuerverfahren

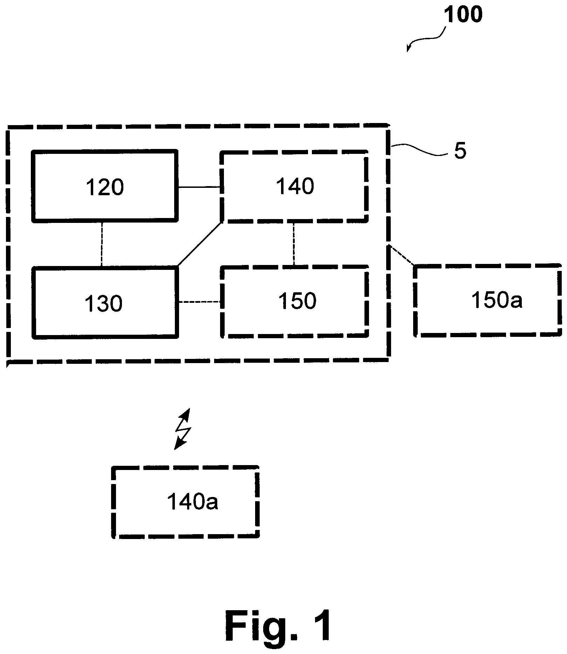

Fig. 1 zeigt System 100. Das System 100 umfasst eine Temperaturmessvorrichtung 120, Bildaufzeichnungsmittel 130 und eine Auswerteeinheit 140, wobei die Auswerteeinheit 140 kommunikativ in Verbindung mit jeweils der Temperaturmessvorrichtung 120 und den Bildaufzeichnungsmitteln 130 steht. Gemäß einer Ausführungsform sind die Temperaturmessvorrichtung 120 und die Bildaufzeichnungsmittel 130 in einem Thermografiemodul 5 integriert, das ferner die Auswerteeinheit 140 beinhalten kann. Gemäß einer anderen Ausführungsform ist eine Auswerteeinheit 140a hingegen beabstandet von Thermografiemodul 5 und damit insbesondere der Temperaturmessvorrichtung 120 und den Bildaufzeichnungsmitteln 130 angeordnet und steht mit letzteren in drahtloser Kommunikation. Es ist folglich nicht erforderlich, die für die Auswerteeinheit 140 erforderliche Verarbeitungskapazität im Thermografiemodul 5 selbst vorzusehen.

Die Temperaturmessvorrichtung 120 umfasst bevorzugt eine Infrarotkamera, die in einem zeilenweisen Abtastmodus operieren kann. Gemäß anderen Ausführungsformen ist ein Infrarotscanner bzw. Wärmeabtaster, ein schwenkbarer Pyrometer, ein über einen Drehspiegel umgelenkter Pyrometer oder ein Pyrometer-Array vorgesehen. Die Bildaufzeichnungsmittel umfassen eine optische Kamera. Für die kontinuierliche Temperaturerfassung ist ein zeilenweises Abtasten des Belages vorteilhaft, wohingegen für die erfindungsgemäße Erstellung von Aufnahmen Gesamtaufnahmen von größeren Bereichen, die ermittelte Abweichungsbereiche enthalten oder diesen zugeordnet sind, vorteilhaft sind.
Die Auswerteeinheit 140 bzw. 140a ist konfiguriert, einen Bereich des eingebauten Belages 3 als Abweichungsbereich 6 zu bestimmen, wenn basierend auf für den Bereich erfassten Temperaturwerten ein oder mehrere Abweichungskriterien erfüllt sind. Die Bestimmung erfolgt während des Einbaus und in zeitlicher Nähe zur Erfassung der Temperaturwerte für den Bereich und das System 100 ist konfiguriert, mit den Bildaufzeichnungsmitteln eine dem Abweichungsbereich 6 zugeordnete Aufnahme 7 zu erstellen.
Gemäß einer Ausführungsform wird in vorbestimmten zeitlichen oder räumlichen Abständen während der Temperaturerfassung eine Gesamtaufnahme von größeren Bereichen des eingebauten Belages 3 erstellt und im Nachhinein eine Zuordnung zu Abweichungsbereichen 6 vorgenommen. Für Aufnahmen 7, zu denen kein Abweichungsbereich 6 bestimmt wurde, kann das System 100 einen Löschbefehl erzeugen, der die entsprechende Aufnahme aus dem Speicher löscht, wodurch die erforderliche Speicherkapazität begrenzt wird. Alternativ kann das System 100 eingerichtet sein, erst in Reaktion auf die Bestimmung eines Abweichungsbereiches 6 eine zugeordnete Aufnahme 7 in entsprechender zeitlicher Nähe zu erstellen, beispielsweise innerhalb weniger Zehntelsekunden von der Erfassung der Temperaturwerte des Abweichungsbereiches 6. Ferner ist gemäß einer Ausführungsform eine Mischform vorgesehen, die die Erstellung von Abschnittsaufnahmen 7 in regelmäßigen Abständen vorsieht sowie zusätzlich in Reaktion auf die Bestimmung eines Abweichungsbereiches 6. Zusätzlich können Mittel in einem Bedienfeld des Straßenfertigers und/oder des Thermografiemoduls 5, an diesem selbst oder in einer vom Thermografiemodul 5 entfernten, vorzugsweise mobilen Bedieneinheit, vorgesehen sein, die eine manuelle Auslösung der Bildaufzeichnungsmittel zur Dokumentation der Einbautemperaturerfassung zu einem gewünschten Zeitpunkt zulassen.

Die Auswerteeinheit 140, 140a kann gemäß einer vorteilhaften Ausführungsform ferner mit Bilderkennungsfähigkeiten ausgestattet sein, welche die erstellten Aufnahmen 7 analysieren und eine Auswahl derjenigen Aufnahmen 7 treffen, die vordefinierte und/oder nicht vordefiniert Objekte abbilden. Nicht vordefinierte Objekte können anhand vorbestimmter Kriterien identifiziert werden, wobei die Kriterien mittels eines Lernprozesses angepasst werden können. Bei der Analyse und Auswahl kann vorteilhaft die Kenntnis der Fixierungsposition und der bestimmungsgemäßen Ausrichtung des Thermografiemoduls 5 Verwendung finden. Anhand eines Vergleiches der Position des Abweichungsbereiches 6 mit einer Position des oder der Objekte in der zugeordneten Aufnahme 7 kann die Auswerteeinheit 140, 140a vorteilhaft bestimmen, ob die Aufnahme 7 eine Fehlstelle des eingebauten Belages 3 oder das Vorliegen eines Fremdobjektes zum Zeitpunkt der Temperaturerfassung dokumentiert und den Abweichungsbereich 6 entsprechend markieren. In einem weiteren Schritt können Abweichungsbereiche 6 und zugeordnete Aufnahmen verworfen werden, die aufgrund von Fehlmessungen und/oder dem Vorliegen von Fremdobjekten im Temperaturerfassungsbereich bestimmt wurden, und lediglich diejenigen Abweichungsbereiche mit zugeordneten Zusatzinformation wie der zugeordneten Bildaufnahme und optional einer zugeordneten Geoposition für eine spätere Verwendung in einem Permanentspeicher vorgehalten werden.

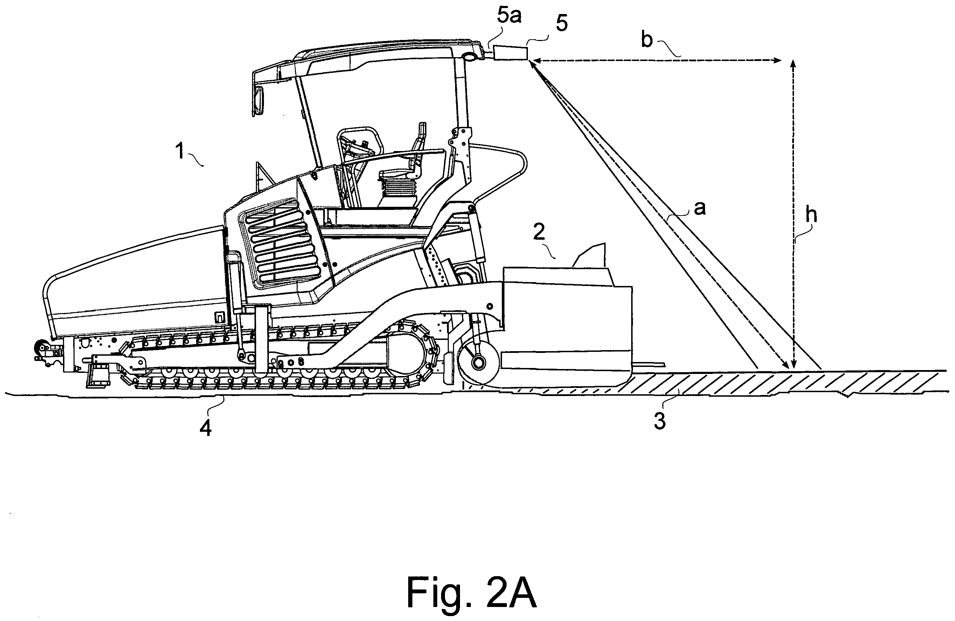

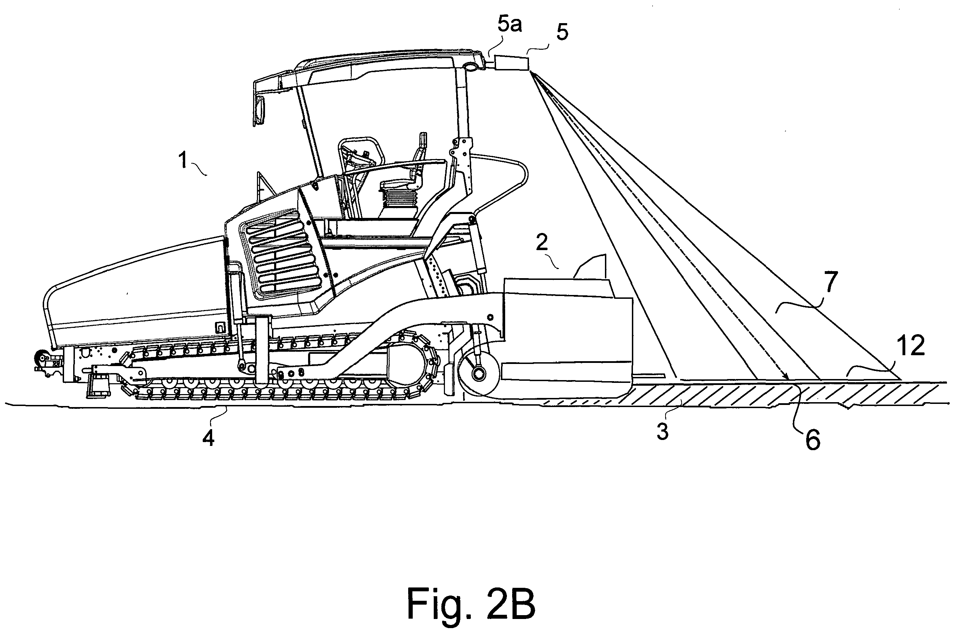

Fig. 2A zeigt einen Straßenfertiger 1 auf einem Planum 4 bei der Aufbringung eines Belages 3, beispielsweise von Asphalt, mittels einer vom Fertiger 1 gezogenen Einbaubohle 2. In der gezeigten Ausführungsform ist am Dach des Fertigers 1 ein Thermografiemodul 5 mittels Fixierungsmitteln 5a angebracht. Dabei befindet sich das Thermografiemodul 5 mit zumindest der Temperaturmessvorrichtung 120 und den Bildaufzeichnungsmitteln 130 des Systems 100 nach Fig. 1 in einer Höhe h über dem Belag 3 und ist konfiguriert, die Temperatur eines Bereiches des eingebauten Belages 3 in einem Abstand b hinter dem Thermografiemodul 5 zu erfassen, d.h. der Höhe h entsprechend in einem Abstand a vom Thermografiemodul 5. Die Temperaturerfassung erfolgt zeilenweise in einer zur Fahrtrichtung des Fertigers 1 transversalen Richtung entlang der Breite des eingebauten Belages 3. In Fig. 2B ist die Erstellung einer Aufnahme 7 für einen Abschnitt 12 des eingebauten Belages zur Dokumentation der Erfassung der Temperatur eines Abweichungsbereiches 6 durch das Thermografiemodul 5 eines Systems 100 gemäß einer Ausführungsform der Erfindung dargestellt. Dabei kann, wie oben ausgeführt, die Auswerteeinheit 140a des Systems 100 auch entfernt vom Fertiger 1 und damit sogar entfernt vom Einbauprozess angeordnet sein. In einer Ausführungsform ist die Auswerteeinheit 140a als eine Anwendungs-Software bzw. App für mobile Endgeräte, beispielsweise Smartphones, vorgesehen.

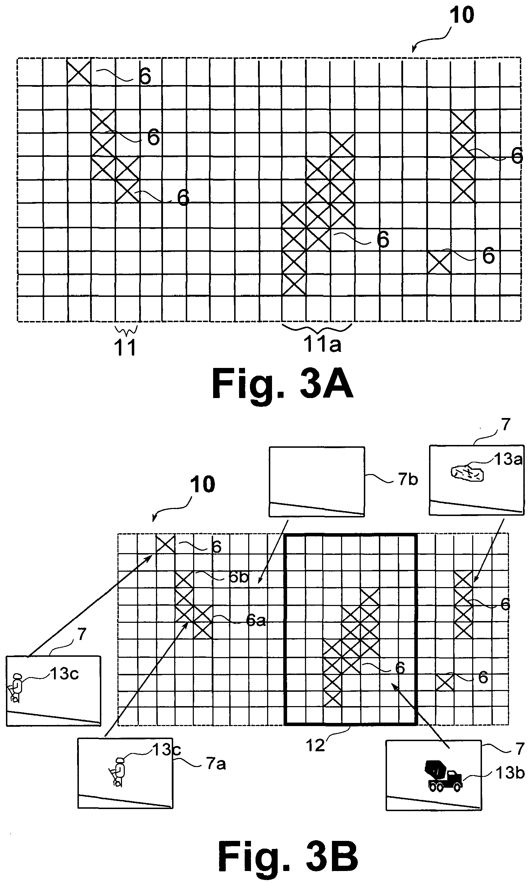

Die hinter dem Fertiger 1, gemäß einer Ausführungsform hinter der Einbaubohle 2, wobei auch eine Temperaturerfassung innerhalb der Einbaubohle 2 vorgesehen sein kann, erfassten Zeilen der Temperaturwerte können durch Aneinanderfügen der zeilenweise ermittelten Temperaturwertinformation zu einem zweidimensionalen Temperaturprofil bzw. Temperaturteppich 10 verdichtet werden. In Fig. 3A (und später auch in Fig. 3B) weist die Fahrtrichtung des Fertigers 1 von rechts nach links.

Der in Fig. 3A dargestellte Bereich des Temperaturprofils 10 entspricht einer Anzahl von elf transversalen Messpunkten der Temperatur bzw. in transversaler Richtung zu Messpunkten zusammengefassten Teilbereichen. Dabei kann die zeilenweise Abtastung entweder mittels Zeilen 11, die in Fahrtrichtung einem Messpunkt entsprechen oder zu einem solchen zusammengefasst werden, oder mittels Zeilen 11a, die eine räumliche Auflösung der abgetasteten transversalen Temperaturwerte in drei Teilbereiche bzw. drei Messpunkte in Fahrtrichtung aufweisen, vorgesehen sein.

Im beispielhaft dargestellten Temperaturprofil 10 sind mehrere Bereiche des eingebauten Belages als Abweichungsbereich 6 bestimmt worden. Dabei entspricht der innerhalb der in Fahrtrichtung aufgelösten Zeile 11a ermittelte Abweichungsbereich 6 bereits einem zweidimensionalen Bereich 6 mit abweichenden Temperaturmesswerten, wohingegen die übrigen dargestellten Abweichungsbereiche 6 eindimensionaler Natur sind und Ausschnitten der jeweiligen transversal erfassten Temperaturwerte entsprechen. Gemäß einer Ausführungsform kann ein Abweichungsbereich 6 auch derart bestimmt werden, dass einzelne Temperaturmesswerte oder kleine Temperaturmesswertbereiche innerhalb eines Abweichungsbereiches 6 nicht die Abweichungskriterien erfüllen, die Messwerte aufgrund entsprechend definierter übergeordneter Zusammenfassungskriterien aber dennoch als zu einem zusammengehörigen Abweichungsbereich 6 gehörig eingestuft werden.

In Fig. 3B sind einerseits die Ursachen für die erfassten Fehlstellen bzw. bestimmten Abweichungsbereiche 6, 6a, 6b und andererseits die Zuordnung entsprechender erstellter Aufnahmen 7 zu den Abweichungsbereichen 6 dargestellt. In einem Bereich, dessen Temperaturwerte keine Auffälligkeiten aufweisen, ist in einer ggf. manuell erstellten Aufnahme 7b entsprechend auch kein Fremdobjekt abgebildet. Im Gegensatz hierzu zeigt die Aufnahme 7 des Abweichungsbereichs 6 zur Fehlstelle 13a eine Irregularität im eingebauten Belag, die anhand der abweichenden Temperaturwerte erkannt wurde. Für diese Fehlstelle 13a des Einbaus kann nachgelagert eine Überprüfung bzw. wenn erforderlich eine Nachbesserung vorgenommen werden. Die Fehlstelle ist somit durch die zugeordnete Aufnahme 7 der Einbaufehlstelle 13a dokumentiert.

Die Aufnahme 7 des Abschnittes 12 des eingebauten Belages 3 dokumentiert eine Ursache für die Abweichung in den erfassten Temperaturwerten, die zur Bestimmung eines größeren Abweichungsbereiches 6 geführt hat. Ursache ist das Queren des Fremdobjektes 13b und eine entsprechende Erfassung der Temperatur des Fremdobjektes, das, wie dargestellt, ein anderes Fahrzeug 13b des Asphaltierungszuges sein kann, und nicht eine Irregularität bzw. Abweichung der Temperatur des eingebauten Belages 3, beispielsweise nach oben oder unten, wie etwa unter 70° Celsius.
Im linken oberen Bereich des in Fig. 3B dargestellten Abschnittes eines Temperaturprofils 10 wurde ebenfalls eine Abweichung erkannt und dementsprechend Abweichungsbereiche 6a und 6b bestimmt, deren Ursache die Erfassung der Temperatur einer auf dem eingebauten Belag befindlichen Person 13c des Asphaltierungszugpersonals darstellt. Die Abweichungsbereiche 6a und 6b wurden aufgrund der Tatsache, dass sie in aufeinander folgenden Zeilen der Temperaturerfassung angeordnet sind und zudem in räumlicher Nähe erfasst wurden, unter Kenntnis der zeitlichen Beabstandung der Zeilenerfassung, ggf. unter Berücksichtigung der Fahrgeschwindigkeit des Straßenfertigers 1 und/oder anderer Parameter, beispielsweise zur Definition möglicher Fremdobjektdimensionen, als zu einem einzigen Fremdobjekt gehörig identifiziert und deshalb auch durch nur eine einzige Aufnahme 7a dokumentiert. Die einem einzelnen Messpunkt entsprechende Abweichungsbereichstelle 6 hingegen wurde mit einer neuen Aufnahme 7 für dasselbe Fremdobjekt, Person 13c, dokumentiert, da beispielsweise kein ausreichender räumlicher Überlapp festgestellt wurde. Eine beispielhafte Ursache kann sein, dass die Person nach Vornahme eines Eingriffes am eingebauten Belag im Bereich der Abweichungsbereiche 6a und 6b den Asphaltbelag rasch verlassen hat und aufgrund des dadurch größeren räumlichen Abstandes zwischen den zeilenweise erfassten Abweichungsbereichen keine Zuordnung zu der gemeinsamen Aufnahme 7a erfolgt ist.

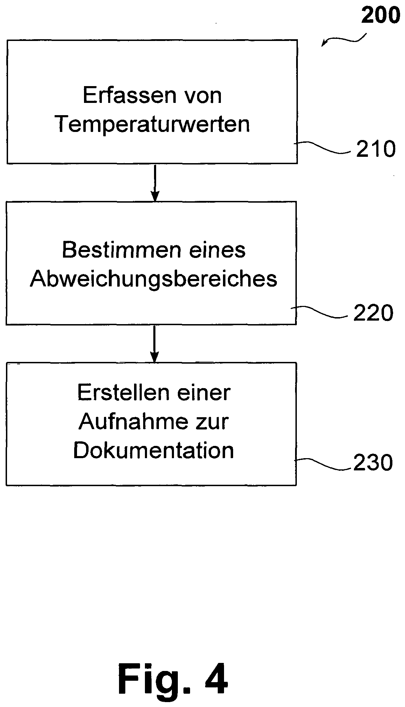

Fig. 4 zeigt schematisch die Schritte eines Verfahrens 200 zur Dokumentation der Erfassung der Temperatur des von einem Fertiger 1 bzw. Straßenfertiger eingebauten Belages 3. In Schritt 210 werden kontinuierlich Temperaturwerte des eingebauten Belages erfasst. Wenn für einen Bereich die erfassten Temperaturwerte ein oder mehrere Abweichungskriterien erfüllen, wird der Bereich in Schritt 220 als Abweichungsbereich des eingebauten Belages bestimmt. Die Bestimmung erfolgt während des Einbaus und in zeitlicher Nähe zur jeweiligen Erfassung der Temperaturwerte für den Bereich. In Schritt 230 wird eine dem Abweichungsbereich zugeordnete Aufnahme 7 zur Dokumentation der Erfassung der Temperaturwerte für den Abweichungsbereich erstellt. Wie oben ausgeführt, kann diese Erstellung vor oder nach dem Bestimmen eines Abweichungsbereiches, entweder in regelmäßigen zeitlichen Abständen, in Reaktion auf die Bestimmung eines Abweichungsbereiches und/oder durch manuelle Auslösung erfolgen. Dementsprechend ist die Reihenfolge der Schritte 210, 220 und 230 als nicht beschränkend zu verstehen und auch zu verstehen, dass die kontinuierliche Erfassung in Schritt 210 nach einem Bestimmen bzw. Erstellen in den Schritten 220 und 230 fortfährt bzw. von Neuem beginnt.

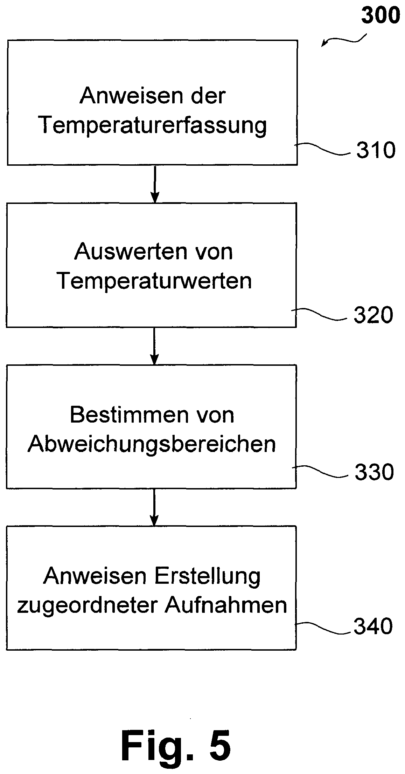

Fig. 5 zeigt Schritte eines Steuerverfahrens 300, das bei Ausführung von computerausführbaren Anweisungen eines computerlesbaren Speichermediums ausgeführt wird. Dabei kann die computergestützte Ausführung durch eine Steuervorrichtung des Systems 100 innerhalb oder an dem Fertiger 1 oder an einem Ort, der von dem Fertiger 1 beabstandet ist, erfolgen. Zur Ausführung kann die Auswerteeinheit 140 oder 140a der vorgenannten Ausführungsformen vorgesehen sein oder eine Steuervorrichtung bzw. eine steuernde Computereinrichtung, die in wirkender Kommunikation mit der Auswerteeinheit 140, 140a steht. In Schritt 310 des Steuerverfahrens 300 wird eine Temperaturmessvorrichtung angewiesen, während eines Einbauprozesses kontinuierlich die Temperatur des von einem Fertiger 1 eingebauten Belages 3 zu erfassen. In Schritt 320 werden während des Einbauprozesses und in zeitlicher Nähe zur Erfassung der Temperaturwerte die erfassten Temperaturwerte ausgewertet. Gemäß Schritt 330 wird ein Bereich des eingebauten Belages 3 als Abweichungsbereich 6 bestimmt, wenn basierend auf für den Bereich erfassten Temperaturwerten ein oder mehrere Abweichungskriterien erfüllt sind. Gemäß Schritt 340 des Steuerverfahrens werden Bildaufzeichnungsmittel angewiesen, für einen Abweichungsbereich eine zugeordnete Aufnahme 7 zur Dokumentation der Erfassung der Temperaturwerte für den Abweichungsbereich 6 zu erstellen, wobei die Erstellung vor dem Bestimmen eines Abweichungsbereiches 6, beispielsweise in periodischen Zeitabständen, in Reaktion auf die Bestimmung eines Abweichungsbereiches 6 und/oder durch manuelle Auslösung verursacht erfolgen kann.

Die Verfahren 200 bzw. 300 werden erfindungsgemäß weiter ausgebildet. Dies gilt für die Definition von Abweichungskriterien, die zeilenweise Erfassung von transversalen Temperaturwerten, die Zuordnung von ein oder mehreren Aufnahmen 7, 7a an einen oder mehrere Abweichungsbereiche 6, 6a bzw. 6b, die Zuordnung einer Geoposition an einen Abweichungsbereich 6 als Zusatzinformation sowie die Speicherung der Zusatzinformationen, bestehend aus den Daten der Aufnahmen 7, 7a und/oder den Geopositionsinformationsdaten für Abweichungsbereiche.
Die Speicherung kann auf Wechselmedien wie einem Wechseldatenträger bzw. einem portables Speichermedium erfolgen oder die Daten können per Funkverbindung an einen Server zur dortigen Speicherung oder zur Speicherung in einem Cloud-Speicher übertragen werden. Zur vorteilhaften Begrenzung einer erforderlichen Speicherkapazität kann auch eine Zwischenspeicherung in einen Puffer bzw. einem flüchtigen Datenspeicher erfolgen und lediglich bei Hinzutreten weiterer Merkmale, wie beispielsweise einem Bestätigungssignal durch einen Operateur des Fertigers bzw. einer Steuereinheit und/oder der Auswerteeinheit 140, 140a des Systems 100 eine dauerhafte Speicherung einer Aufnahme 7 in einem Permanentspeicher erfolgen. Hierfür kann ein Bildschirm am Fertiger 1 oder an einem zum Fertiger entfernten Ort vorgesehen sein, wobei der Bildschirm an die Auswerteeinheit 140, 140a und/oder eine Steuereinheit des Systems 100 angeschlossen ist und Bildinformation von dieser empfängt. Mittels des Bildschirms kann eine aktuell erstellte Aufnahme 7 einem Bediener zur Entscheidung über eine Verwerfung oder Speicherung angeboten werden.

## Patentansprüche

1. System (100), umfassend
einen Fertiger (1) mit einer Temperaturmessvorrichtung (120) zur kontinuierlichen Erfassung von Temperaturwerten eines von dem Fertiger (1) eingebauten Belages (3);
Bildaufzeichnungsmittel (130); und
eine Auswerteeinheit (140), wobei die Auswerteeinheit (140) konfiguriert ist, einen Bereich des eingebauten Belages (3) als Abweichungsbereich (6) zu bestimmen, wenn basierend auf für den Bereich erfassten Temperaturwerten ein oder mehrere Abweichungskriterien erfüllt sind, wobei die Bestimmung während des Einbaus und in zeitlicher Nähe zur Erfassung der Temperaturwerte für den Bereich erfolgt und das System (100) konfiguriert ist, mit den Bildaufzeichnungsmitteln (130) eine dem Abweichungsbereich (6) zugeordnete Aufnahme (7) zu erstellen,
wobei die Auswerteeinheit (140) konfiguriert ist, die Aufnahme (7) dem Abweichungsbereich (6) als Zusatzinformation zuzuordnen, und das System (100) konfiguriert ist, die Zusatzinformation zusammen mit einem aus den erfassten Temperaturwerten gebildeten zweidimensionalen Profil (10) der Einbautemperatur abzuspeichern,
wobei das System (100) eingerichtet ist, die erfassten Temperaturwerte zeilenweise abzulegen, wobei jede Zeile (11) den zur Fahrtrichtung des Fertigers (1) transversalen Temperaturverlauf der eingebauten Schicht repräsentiert, und die Bildaufzeichnungsmittel (130) konfiguriert sind, als Aufnahme (7) eine Gesamtaufnahme eines Abschnitts (12) des eingebauten Belages (3) zu erstellen, und
wobei der Abweichungsbereich ein erster Abweichungsbereich (6a) ist und die Auswerteeinheit (140) konfiguriert ist, einem zweiten Abweichungsbereich (6b) dieselbe Aufnahme (7a) als Zusatzinformation auf Basis einer zeitlich-räumlichen Beziehung zwischen dem ersten und zweiten Abweichungsbereich (6a, 6b) und einem oder mehreren vordefinierten Parametern, die Fehlmessungsursachen repräsentieren, zuzuordnen, wobei der erste und zweite Abweichungsbereich (6a, 6b) in aufeinander folgenden Zeilen der Temperaturerfassung angeordnet sind und wobei die Bildaufzeichnungsmittel eine optische Kamera umfassen.

2. System nach Anspruch 1, wobei das System (100) konfiguriert ist, die Aufnahme (7) derart in zeitlicher Nähe zur Erfassung der Temperaturwerte zu erstellen, dass die Aufnahme (7) der Dokumentation der Erfassung der Temperaturwerte für den Abweichungsbereich (6) dient.

3. System nach einem der vorigen Ansprüche, wobei die Abweichungskriterien so konfiguriert sind, dass ein Abweichungsbereich insbesondere bestimmt wird, wenn eine Fehlmessung vorliegt, die eine Erfassung der Temperatur anderer Objekte (13b, 13c) statt des eingebauten Belages (3) und/oder eine Fehlfunktion und/oder Fehlausrichtung des Fertigers (1) und/oder der Temperaturmessvorrichtung (120) umfasst.

4. System nach einem der vorigen Ansprüche, wobei die Abweichungskriterien relative oder absolute Untergrenzen, Obergrenzen und/oder Inhomogenitäten der Temperatur umfassen.

5. System nach einem der vorigen Ansprüche, wobei die erfassten Temperaturwerte Einbautemperaturwerte sind, die von der Temperaturmessvorrichtung (120) bei oder nach einer Vorverdichtung durch eine Einbaubohle (2) des Fertigers (1) erfasst werden.

6. System nach einem der vorigen Ansprüche, wobei das System (100) ferner Mittel (150, 150a) aufweist zur Erfassung der Geoposition von Bereichen des eingebauten Belages und die Auswerteeinheit (140) konfiguriert ist, eine für einen Abweichungsbereich (6) erfasste Geoposition dem Abweichungsbereich (6) als Zusatzinformation zuzuordnen.

7. System nach einem der vorigen Ansprüche, wobei die Temperaturmessvorrichtung (120) einen Wärmeabtaster, einen schwenkbaren Pyrometer, ein Pyrometer-Array und/oder eine Infrarot-Kamera umfasst.

8. System nach einem der vorigen Ansprüche, wobei die Temperaturmessvorrichtung (120) und die Bildaufzeichnungsmittel (130) in einem Thermografiemodul (5) integriert sind, das ferner Mittel (5a) zur Anbringung an einem Fertiger (1) oberhalb der Einbaubohle (2) aufweist.

9. System nach einem der vorigen Ansprüche, wobei die Auswerteeinheit (140a) an einem zum Fertiger (1) entfernten Ort angeordnet ist und drahtlos mit der Temperaturmessvorrichtung (120) und den Bildaufzeichnungsmitteln (130) kommuniziert.

10. Verfahren (200) zur Dokumentation der Erfassung der Temperatur des von einem Fertiger (1) eingebauten Belages (3), mit den Schritten:
kontinuierliches oder intervallweises Erfassen (210) von Temperaturwerten des eingebauten Belages (3), umfassend zeilenweises Ablegen der erfassten Temperaturwerte, wobei jede Zeile (11) den zur Fahrtrichtung des Fertigers (1) transversalen Temperaturverlauf der eingebauten Schicht repräsentiert;
Bestimmen (220) eines Bereiches des eingebauten Belages als ersten Abweichungsbereich (6, 6a), wenn für den Bereich erfasste Temperaturwerte ein oder mehrere Abweichungskriterien erfüllen, wobei die Bestimmung während des Einbaus und in zeitlicher Nähe zur Erfassung der Temperaturwerte für den Bereich erfolgt;
Erstellen (230), mit einer optischen Kamera, einer dem ersten Abweichungsbereich (6) als Zusatzinformation zugeordneten Aufnahme (7a) zur Dokumentation der Erfassung der Temperaturwerte für den Abweichungsbereich, wobei die Aufnahme (7a) eine Gesamtaufnahme eines Abschnitts (12) des eingebauten Belages (3) ist;
Bestimmen eines zweiten Bereiches des eingebauten Belages als zweiten Abweichungsbereich (6b) und Zuordnen derselben Aufnahme (7a) als Zusatzinformation auf Basis einer zeitlich-räumlichen Beziehung zwischen dem ersten und zweiten Abweichungsbereich (6a, 6b) und einem oder mehreren vordefinierten Parametern, die Fehlmessungsursachen repräsentieren, wobei der erste und zweite Abweichungsbereich (6a, 6b) in aufeinander folgenden Zeilen der Temperaturerfassung angeordnet sind; und
Abspeichern der Zusatzinformation zusammen mit einem aus den erfassten Temperaturwerten gebildeten zweidimensionalen Profil (10) der Einbautemperatur.

11. Computerlesbares Speichermedium mit computer-ausführbaren Anweisungen, die bei ihrer Ausführung ein Steuerverfahren (300) durchführen mit den Schritten:
Anweisen (310) einer Temperaturmessvorrichtung, während eines Einbauprozesses kontinuierlich oder intervallweise die Temperatur des von einem Fertiger eingebauten Belages zu erfassen, umfassend zeilenweises Ablegen der erfassten Temperaturwerte, wobei jede Zeile (11) den zur Fahrtrichtung des Fertigers (1) transversalen Temperaturverlauf der eingebauten Schicht repräsentiert;
Auswerten (320) von erfassten Temperaturwerten während des Einbauprozesses und in zeitlicher Nähe zur Erfassung der Temperaturwerte;
Bestimmen (330) eines Bereiches des eingebauten Belages als ersten Abweichungsbereich (6a), wenn basierend auf für den Bereich erfassten Temperaturwerten ein oder mehrere Abweichungskriterien erfüllt sind;
Anweisen (340) von Bildaufzeichnungsmitteln, für den ersten Abweichungsbereich (6a) eine zugeordnete Aufnahme (7a) zur Dokumentation der Erfassung der Temperaturwerte für den ersten Abweichungsbereich zu erstellen, wobei die Aufnahme (7a) eine Gesamtaufnahme eines Abschnitts (12) des eingebauten Belages ist und wobei die Bildaufzeichnungsmittel eine optische Kamera umfassen;
Zuordnen der Aufnahme zu dem ersten Abweichungsbereich als Zusatzinformation;
Bestimmen eines zweiten Bereiches des eingebauten Belages als zweiten Abweichungsbereich (6b) und Zuordnen derselben Aufnahme (7a) als Zusatzinformation auf Basis einer zeitlich-räumlichen Beziehung zwischen dem ersten und zweiten Abweichungsbereich (6a, 6b) und einem oder mehreren vordefinierten Parametern, die Fehlmessungsursachen repräsentieren, wobei der erste und zweite Abweichungsbereich (6a, 6b) in aufeinander folgenden Zeilen der Temperaturerfassung angeordnet sind; und
Abspeichern der Zusatzinformation zusammen mit einem aus den erfassten Temperaturwerten gebildeten zweidimensionalen Profil (10) der Einbautemperatur.

## Claims

1. A system (100) comprising:
a paver (1) comprising a temperature measurement device (120) for continuously detecting temperature values of a pavement (3) laid by means of the paver (1);
an image recording unit (130); and
an evaluation unit (140), the evaluation unit (140) being configured to determine an area of the laid pavement (3) as a deviation area (6), if, based on temperature values detected for said area, one or more deviation criteria are fulfilled, wherein the determination is carried out during laying and in temporal proximity to the detection of the temperature values for said area, and said system (100) is configured to generate, making use of the image recording unit (130), an image (7) assigned to the deviation area (6),
wherein the evaluation unit (140) is configured for assigning the image (7) to the deviation area (6) as auxiliary information, and the system (100) is configured for storing the auxiliary information together with a two-dimensional profile (10) of the laying temperature formed on the basis of the detected temperature values,
wherein the system (100) is configured for storing the detected temperature values line by line, each line (11) representing the temperature profile of the paved layer transversal to the travelling direction of the paver (1), and the image recording unit (130) is configured for generating as image (7) an overall image of a section (12) of the laid pavement (3), and
wherein the deviation area is a first deviation area (6a) and the evaluation unit (140) is configured for assigning the same image (7a) to a second deviation area (6b) as auxiliary information on the basis of a temporal-spatial relationship between the first and second deviation areas (6a, 6b) and one or more predefined parameters representing causes for incorrect measurements, wherein the first and second deviation areas (6a, 6b) are arranged in subsequent detections of temperature and wherein the image recording unit comprises an optical camera.

2. The system according to claim 1, wherein the system (100) is configured for generating the image (7) in temporal proximity to the detection of the temperature values such that the image (7) serves to document the detection of the temperature values for the deviation area (6).

3. The system according to one of the preceding claims, wherein the deviation criteria are configured such that a deviation area will especially be determined, if an incorrect measurement has taken place, which comprises a detection of the temperature of objects (13b, 13c) other than the laid pavement (3) and/or a malfunction and/or an incorrect orientation of the paver (1) and/or of the temperature measurement device (120).

4. The system according to one of the preceding claims, wherein the deviation criteria comprise relative or absolute lower limits, upper limits and/or inhomogeneities of the temperature.

5. The system according to one of the preceding claims, wherein the detected temperature values are laying-process temperature values detected by the temperature measurement device (120) during or after precompacting through a screed (2) of the paver (1).

6. The system according to one of the preceding claims, wherein the system (100) additionally comprises units (150, 150a) for detecting the geoposition of areas of the laid pavement, and the evaluation unit (140) is configured for assigning a geoposition detected for a deviation area (6) to said deviation area (6) as auxiliary information.

7. The system according to one of the preceding claims, wherein the temperature measurement device (120) comprises a thermal scanner, a pivotable pyrometer, a pyrometer array and/or an infrared camera.

8. The system according to one of the preceding claims, wherein the temperature measurement device (120) and the image recording unit (130) are integrated in a thermographic module (5), which additionally comprises units (5a) for mounting on a paver (1) above the screed (2).

9. The system according to one of the preceding claims, wherein the evaluation unit (140a) is arranged at a location remote to the paver (1) and wirelessly communicates with the temperature measurement device (120) and the image recording unit (130).

10. A method (200) for documenting detection of the temperature of the pavement (3) laid by a paver (1), comprising the following steps:
detecting (210) continuously or at intervals temperature values of the laid pavement (3), comprising storing the detected temperature values line by line, each line (11) representing the temperature profile of the paved layer transversal to the travelling direction of the paver (1);
determining (220) an area of the laid pavement as first deviation area (6, 6a), if temperature values detected for said area fulfil one or more deviation criteria, said determination being carried out during laying and in temporal proximity to the detection of the temperature values for said area;
generating (230), using an optical camera, an image (7) assigned to the deviation area (6) so as to document the detection of the temperature values for said deviation area, wherein the image (7) is an overall image of a section (12) of the laid pavement (3);
determining a second area of the laid pavement as second deviation area (6b) and assigning the same image (7a) to a second deviation area (6b) as auxiliary information on the basis of a temporal-spatial relationship between the first and second deviation areas (6a, 6b) and one or more predefined parameters representing causes for incorrect measurements, wherein the first and second deviation areas (6a, 6b) are arranged in subsequent detections of temperature; and
storing the auxiliary information together with a two-dimensional profile (10) of the laying temperature formed on the basis of the detected temperature values.

11. A computer-readable storage medium with computer-executable instructions, which, when executed, carry out a control method (300) comprising the following steps:
instructing (310) a temperature measurement device to detect, during a laying process, continuously or at intervals the temperature of the pavement laid by a paver, comprising storing the detected temperature values line by line, each line (11) representing the temperature profile of the paved layer transversal to the travelling direction of the paver (1);
evaluating (320) detected temperature values during the laying process and in temporal proximity to the detection of the temperature values;
determining (330) an area of the laid pavement as a first deviation area (6a), if, on the basis of temperature values detected for said area, one or more deviation criteria are fulfilled;
instructing (340) an image recording unit to generate for the first deviation area (6a) an assigned image (7a) so as to document the detection of the temperature values for said first deviation area, wherein the image (7a) is an overall image of a section (12) of the laid pavement and wherein the image recording unit comprises an optical camera;
assigning the image to the first deviation area as auxiliary information;
determining a second area of the laid pavement as second deviation area (6b) and assigning the same image (7a) as auxiliary information on the basis of a temporal-spatial relationship between the first and second deviation areas (6a, 6b) and one or more predefined parameters representing causes for incorrect measurements, wherein the first and second deviation areas (6a, 6b) are arranged in subsequent detections of temperature; and
storing the auxiliary information together with a two-dimensional profile (10) of the laying temperature formed on the basis of the detected temperature values.

## Revendications

1. Système (100) comprenant
un finisseur (1) avec un dispositif de mesure de température (120) pour relever de manière continue des valeurs de température d'un revêtement (3) posé par le finisseur (1) ;
des moyens d'enregistrement d'image (130) ; et
une unité de traitement de données (140), l'unité de traitement de données (140) étant configurée pour déterminer une zone du revêtement (3) ayant été posé, comme étant une zone d'écart (6) lorsqu'en se basant sur des valeurs de température relevées pour la zone, un ou plusieurs critères d'écart sont remplis, la détermination étant effectuée pendant la pose du revêtement et à proximité temporelle du relevé des valeurs de température pour ladite zone, et le système (100) étant configuré pour établir, à l'aide des moyens d'enregistrement d'image (130), un enregistrement (7) associé à la zone d'écart (6),
l'unité de traitement de données (140) étant par ailleurs configurée pour associer l'enregistrement (7) à la zone d'écart (6) en tant qu'information additionnelle, et le système (100) étant configuré pour mémoriser l'information additionnelle en commun avec un profil (10) à deux dimensions de la température de pose de revêtement formé à partir des valeurs de température relevées,
le système (100) étant conçu pour stocker, par lignes, les valeurs de température relevées, chaque ligne (11) représentant la courbe de température transversalement à la direction de marche du finisseur (1), de la couche de revêtement posée, et les moyens d'enregistrement d'image (130) étant configurés pour établir en tant qu'enregistrement (7), un enregistrement global d'un secteur (12) du revêtement (3) posé, et
la zone d'écart étant une première zone d'écart (6a), et l'unité de traitement de données (140) étant configurée pour associer à une deuxième zone d'écart (6b) le même enregistrement (7a) en tant qu'information additionnelle, sur la base d'une relation spatio-temporelle entre la première et la deuxième zone d'écart (6a, 6b) et d'un un ou de plusieurs paramètres prédéfinis, qui représentent des causes de défauts de mesure, la première et la deuxième zone d'écart (6a, 6b) étant agencées dans des lignes successives du relevé des températures, et les moyens d'enregistrement d'image comprenant une caméra optique.

2. Système selon la revendication 1, dans lequel le système (100) est configuré pour établir l'enregistrement (7) à proximité temporelle telle du relevé des valeurs de température, que l'enregistrement (7) fasse office de documentation pour le relevé des valeurs de température pour la zone d'écart (6).

3. Système selon l'une des revendications précédentes, dans lequel les critères d'écart sont configurés de manière telle, qu'une zone d'écart soit déterminée notamment en présence d'un défaut de mesure, qui comprend le relevé de la température d'autres objets (13b, 13c) que le revêtement (3) posé, et/ou un fonctionnement défectueux, et/ou une orientation défectueuse du finisseur (1) et/ou du dispositif de mesure de température (120).

4. Système selon l'une des revendications précédentes, dans lequel les critères d'écart comprennent des limites inférieures, des limites supérieures relatives ou absolues et/ou des inhomogénéités de la température.

5. Système selon l'une des revendications précédentes, dans lequel les valeurs de température relevées sont des valeurs de température de pose, qui sont relevées par le dispositif de mesure de température (120) lors ou après un pré-compactage par une table de pose (2) du finisseur (1).

6. Système selon l'une des revendications précédentes, dans lequel le système (100) comprend, par ailleurs, des moyens (150, 150a) pour relever la géolocalisation de zones du revêtement posé, et l'unité de traitement de données (140) est configurée pour associer à la zone d'écart (6), une géolocalisation relevée pour la zone d'écart (6), en tant qu'information additionnelle.

7. Système selon l'une des revendications précédentes, dans lequel le dispositif de mesure de température (120) comprend un palpeur thermique, un pyromètre pivotant, un réseau pyrométrique et/ou une caméra à infrarouge.

8. Système selon l'une des revendications précédentes, dans lequel le dispositif de mesure de température (120) et les moyens d'enregistrement d'image (130) sont intégrés à un module de thermographie (5), qui comprend, par ailleurs, des moyens (5a) pour sa mise en place sur un finisseur (1) au-dessus de la table de pose de revêtement (2).

9. Système selon l'une des revendications précédentes, dans lequel l'unité de traitement de données (140a) est agencée en un lieu éloigné du finisseur (1), et communique sans fil avec le dispositif de mesure de température (120) et les moyens d'enregistrement d'image (130).

10. Procédé (200) pour documenter le relevé de la température du revêtement (3) posé par un finisseur (1), comprenant les étapes suivantes :
le relevé (210) en continu ou par intervalles de valeurs de température du revêtement (3) posé, englobant le stockage par lignes des valeurs de température relevées, chaque ligne (11) représentant la courbe de température transversalement à la direction de marche du finisseur (1), de la couche de revêtement posée ;
la détermination (220) d'une zone du revêtement posé comme étant une première zone d'écart (6, 6a) lorsqu'en se basant sur des valeurs de température relevées pour la zone, un ou plusieurs critères d'écart sont remplis, la détermination étant effectuée pendant la pose du revêtement et à proximité temporelle du relevé des valeurs de température pour ladite zone ;
l'établissement (230), à l'aide d'une caméra optique, d'un enregistrement (7a) associé à la première zone d'écart (6) en tant qu'information additionnelle, pour documenter le relevé des valeurs de température pour la zone d'écart, l'enregistrement (7a) étant un enregistrement global d'un secteur (12) du revêtement (3) posé ;
la détermination d'une deuxième zone du revêtement posé comme étant une deuxième zone d'écart (6b) et l'association du même enregistrement (7a) en tant qu'information additionnelle, sur la base d'une relation spatio-temporelle entre la première et la deuxième zone d'écart (6a, 6b) et d'un un ou de plusieurs paramètres prédéfinis, qui représentent des causes de défauts de mesure, la première et la deuxième zone d'écart (6a, 6b) étant agencées dans des lignes successives du relevé des températures ; et
la mémorisation de l'information additionnelle en commun avec un profil (10) à deux dimensions de la température de pose de revêtement formé à partir des valeurs de température relevées.

11. Support de mémorisation lisible par ordinateur, comprenant des instructions exécutables par ordinateur, qui lors de leur exécution effectuent un procédé de commande (300) comprenant les étapes consistant à :
donner instruction (310) à un dispositif de mesure de température, de relever en continu ou par intervalles des valeurs de température du revêtement posé par un finisseur, englobant le stockage par lignes des valeurs de température relevées, chaque ligne (11) représentant la courbe de température transversalement à la direction de marche du finisseur (1), de la couche de revêtement posée ;
traiter (320) des valeurs de température relevées pendant le processus de pose et à proximité temporelle du relevé des valeurs de température ;
déterminer (330) une zone du revêtement ayant été posé, comme étant une première zone d'écart (6a) lorsqu'en se basant sur des valeurs de température relevées pour la zone, un ou plusieurs critères d'écart sont remplis ;
donner instruction (340) à des moyens d'enregistrement d'image d'établir pour la première zone d'écart (6a) un enregistrement (7a) associé, pour documenter le relevé des valeurs de température pour la première zone d'écart, l'enregistrement (7a) étant un enregistrement global d'un secteur (12) du revêtement posé, et les moyens d'enregistrement d'image comprenant une caméra optique ;
associer l'enregistrement à la première zone d'écart, en tant qu'information additionnelle ;
déterminer une deuxième zone du revêtement posé comme étant une deuxième zone d'écart (6b) et associer le même enregistrement (7a) en tant qu'information additionnelle, sur la base d'une relation spatio-temporelle entre la première et la deuxième zone d'écart (6a, 6b) et d'un un ou de plusieurs paramètres prédéfinis, qui représentent des causes de défauts de mesure, la première et la deuxième zone d'écart (6a, 6b) étant agencées dans des lignes successives du relevé des températures ; et
mémoriser l'information additionnelle en commun avec un profil (10) à deux dimensions de la température de pose de revêtement, formé à partir des valeurs de température relevées.
